Europäisches Patentamt

European Patent Office

Office européen des brevets

(11) Veröffentlichungsnummer: **0 502 402 A1**

## (12) EUROPÄISCHE PATENTANMELDUNG

(21) Anmeldenummer: **92103126.6**

(51) Int. Cl.⁵: **A01K 55/00**

(22) Anmeldetag: **25.02.92**

(30) Priorität: **02.03.91 DE 9102511 U**

(43) Veröffentlichungstag der Anmeldung:
**09.09.92 Patentblatt 92/37**

(84) Benannte Vertragsstaaten:
**AT BE CH DE ES FR GB IT LI LU NL PT**

(71) Anmelder: **Fassbender, Hugo**
**Luxemburger Strasse 77**
**W-5042 Erftstadt-Erp(DE)**

(72) Erfinder: **Fassbender, Hugo**
**Luxemburger Strasse 77**
**W-5042 Erftstadt-Erp(DE)**

(74) Vertreter: **Mey, Klaus-Peter, Dr.-Ing.**
**Dipl.-Wirt.-Ing.**
**Patentanwalt Dr. Mey Aachener Strasse 710**
**W-5020 Frechen 4(DE)**

(54) **Imkerhaube.**

(57) Die Erfindung betrifft einen Kopfschutz für Imker mit einem zum bienendichten Anschluß an einen Anzug, Mantel, Blouson oder Jacke ausgebildeten Bienenschleier, der den Imker bei seiner Arbeit vor Bienenanflug bzw. -stichen sicher schützt und ihn andererseits bei seiner Tätigkeit, die eine möglichst große Bewegungsfreiheit erfordert, so wenig wie möglich behindert und auch einen engen Anschluß am Hals vermeidet. Mit der Erfindung ist eine Imkerhaube (20) mit Kopfband (1) und daran angeordneten, etwa vertikal nach oben sich erstreckenden Stützgliedern (2) vorgesehen, die im Abstand vom Kopf (21) des Imkers ein Haubendach (3) tragen, an dessen Rand (4) der Bienenschleier (5) befestigt ist, wobei der von einem Gummizug (12) eingefaßte untere Rand des Schleiers (5) am bzw. unter dem Revers von Anzug, Mantel usw. schräg nach vorn bis in den Bereich der Brust verlaufend und bienendicht anschließbar ausgebildet ist. Die Stützglieder (2) bestehen aus u-förmigen Drahtbügeln, die mit ihren freien Enden in Taschen (6) des Kopfbandes (1) eingenäht sind. Zweckmäßigerweise ist das Kopfband (1) mittels eines gummierten Frotteebandes (14) einstellbar.

Fig. 1

Die Erfindung betrifft einen Kopfschutz für Imker mit einem zum bienendichten Anschluß an einen Anzug, Mantel, Blouson oder Jacke ausgebildeten Bienenschleier.

Imker-Schutzbekleidungen und insbesondere auch der Kopfschutz als Imkerschleier, Hut-Schleier-Kombination oder Schutzhelme sind seit langem bekannt. Der Zweck einer Imker-Schutzbekleidung und insbesondere der Kopfschutz besteht einerseits darin, den Imker bei seiner Arbeit vor Bienenanflug bzw. -stichen zu schützen und ihn andererseits bei seiner Tätigkeit, die eine möglichst große Bewegungsfreiheit erfordert, so wenig als möglich zu hindern. Im einfachsten Falle besteht dieser Kopfschutz aus einem durchsichtigen Tüllschleier, der vom Hut des Imkers herabhängt oder mit einem Ausschnitt für den Kopfteil des Hutes versehen am Hutrand anschließt und bis über Brust und Schulter des Imkers reicht. Der Schleier wird zweckmäßig mit seinen unteren Rändern unter den Aufschlagkragen von Jacke oder Mantel usw. gesteckt bzw. um den Körper festgezurrt. Bei einem vergleichsweise schmalen Hutrand fällt der Schleier dicht vor dem Gesicht herab, so daß es im Verlaufe unvermeidlicher Kopfbewegungen während der Arbeit berührt wird. Wenn der Imkerkopfschutz nur durch einen Reißverschluß an der Schulter des Kleidungsstückes befestigt ist, wackelt der Kopfschutz beim Arbeiten in gebückter Haltung hin und her und der Schleier kommt dadurch mit Ohren und Nase in Berührung. Das ist lästig, und zudem besteht die Gefahr, daß am Schleier sitzende Bienen doch noch stechen können.

Aus der DE-PS 19 12 742 ist eine aus einer Schutzkleidung und einem Schutzschleier bestehende Imker-Schutzbekleidung bekannt. Mit dieser soll eine Verbindung zwischen Schutzschleier und Schutzanzug bzw. -kleidung mühelos hergestellt und wieder gelöst werden können, wobei diese Verbindung gleichzeitig bienendicht sein soll. Dies wird dadurch erreicht, daß die hochschließende Schutzkleidung mit einem Stehkragen ausgestattet und dieser mit einer nach außen vorragenden Verbreiterung versehen ist, während der Schutzschleier an seinem unteren Rand einen Gummizug aufweist, der im Tragzustand zwecks Bildung eines dichten Anschlusses zwischen Schutzkleidung und Schutzschleier über die Verbreiterung greift. Die Schutzkleidung weist einen eng am Hals anliegenden Kragen auf, an dem der Schleier mit einem konisch nach unten zulaufenden Halsteil mittels Gummizug anschließt. Nachteilig bzw. hinderlich wird dabei der steife und eng am Hals anschließende Kragen empfunden. Zusätzlich verursacht der hochgeschlossene Schutzanzug bzw. die Schutzkleidung ein Gefühl der Beengung und wird besonders bei warmer Witterung als lästig empfunden.

Der Erfindung liegt die Aufgabe zugrunde, einen Kopfschutz für Imker mit einem Bienenschleier zum bienendichten Anschluß an einen Anzug, Mantel, Blouson oder Jacke anzugeben, der die vorgenannten Nachteile vermeidet, insbesondere leicht handhabbar ist und dem Imker mehr Bewegungsfreiheit bietet, Luftzutritt zum Körper gestattet und auch einen engen Anschluß am Hals vermeidet.

Zur Lösung der Aufgabe wird eine Imkerhaube mit Kopfband und daran angeordneten, etwa vertikal nach oben sich erstreckenden Stützgliedern vorgeschlagen, die im Abstand vom Kopf des Imkers ein Haubendach tragen, an dessen Rand der Bienenschleier befestigt ist, wobei der von einem Gummizug eingefaßte untere Rand des Schleiers am bzw. unter dem Revers vom Anzug, Mantel usw. schräg nach vorn bis in den Bereich der Brust verlaufend und bienendicht anschließbar ausgebildet ist.

Weil die Imkerhaube nach der Erfindung ohne Hut getragen wird, gestattet sie vorteilhaft freien Luftzutritt zum Kopf des Trägers. Die am Revers von Anzug, Mantel etc. schräg nach vorn bis in den Bereich der Brust verlaufende Öffnung des Schleiers ermöglicht einen bienendichten Anschluß am Umschlag bzw. Revers, ohne daß die Schutzkleidung hochgeschlossen und am Hals anliegend ausgebildet sein muß. Dadurch ergibt die Haube ein Höchstmaß an Bewegungsfreiheit und vermeidet ein Gefühl des Beengtseins sowie Wärmestau des Körpers, insbesondere bei warmer Witterung. Auch beim Bücken bleibt der Schleier fest und macht jede Kopfbewegung mit.

In vorteilhafter Ausgestaltung der Erfindung bestehen die Stützglieder aus u-förmigen Drahtbügeln, die mit ihren freien Enden in Taschen des Kopfbandes eingenäht sind, wobei es sich um eine besonders einfache und kostengünstige Ausführungsform handelt, die zudem einfach zu handhaben und zusammenfaltbar ist, wodurch nur wenig Platz bei der Aufbewahrung benötigt wird. Zweckmäßigerweise bestehen die Drahtbügel aus Flachprofil-Stahldraht, der bei geringem Gewicht äußerst formstabil ist.

Nach einer weiteren sehr herstellungsfreundlichen Ausgestaltung der Erfindung ist vorgesehen, daß jeweils zwei Drahtbügel mit ihren die Schenkel verbindenden Querstegen mittels parallel angeordneten Stofflaschen derart im Abstand auf einem Stück Trägerstoff aufgenäht sind, daß sie die Seitenkanten eines sich zwischen dem Kopfband und dem Haubendach erstreckenden imaginären Kubus bilden.

Ferner ist nach der Erfindung günstigerweise auch vorgesehen, daß das die Drahtbügel aufnehmende Stück Trägerstoff ein Teil des Haubendaches bildet und mit diesem fest vernäht ist. Diese Ausbildung trägt weiter zur einfachen und somit wirtschaftlich günstigen Herstellung der Imkerhaube bei.

Zweckmäßigerweise ist das Haubendach ein kreisförmiges und am Rand von einem Drahtring aufspannbar gehaltenes, flächenhaftes Formteil aus festem Stoff wie beispielsweise Drillich. Auf diese Weise wird eine leichte und doch steife bzw. formstabile Ausbildung des Haubendaches erzielt.

Nach einer weiteren vorteilhaften Ausgestaltung der Erfindung ist das Kopfband mittels eines gummierten Frotteebandes einstellbar, wodurch eine einfache Anpassung an verschiedene Kopfgrößen ermöglicht wird und sich insbesondere auch die Herstellungskosten infolge größerer Losgrößen reduzieren. Alternativ kann das Kopfband auch als gummiertes dehnbares Band ausgeführt sein.

Darüberhinaus kann es besonders vorteilhaft sein, wenn der Bienenschleier vor dem Gesichtsfeld des Trägers einen Gittereinsatz aus feinmaschigem schwarzen Kunststoffgewebe aufweist, wodurch die Durchsicht verbessert wird.

Weitere Einzelheiten, Merkmale und Vorteile der Erfindung ergeben sich aus der nachstehenden Erläuterung eines in den Zeichnungen schematisch dargestellten Ausführungsbeispieles.

Es zeigen:

Figur 1     eine perspektivische Ansicht eines die Imkerhaube tragenden Imkers,

Figur 2     eine Seitenansicht einer vom Imker getragenen Haube, teilweise im Schnitt,

Figur 3     die Imkerhaube gemäß Fig. 1 und 2 in Seitenansicht und teilweise im Schnitt.

Wie aus den Figuren ersichtlich weist die erfindungsgemäße Imkerhaube (20) ein Kopfband (1) mit daran angeordneten, etwa vertikal nach oben sich erstreckenden Stützgliedern (2) auf, die im Abstand vom Kopf des Imkers ein geschlossenes Haubendach (3) tragen, an dessen Rand (4) der Bienenschleier (5) befestigt ist.

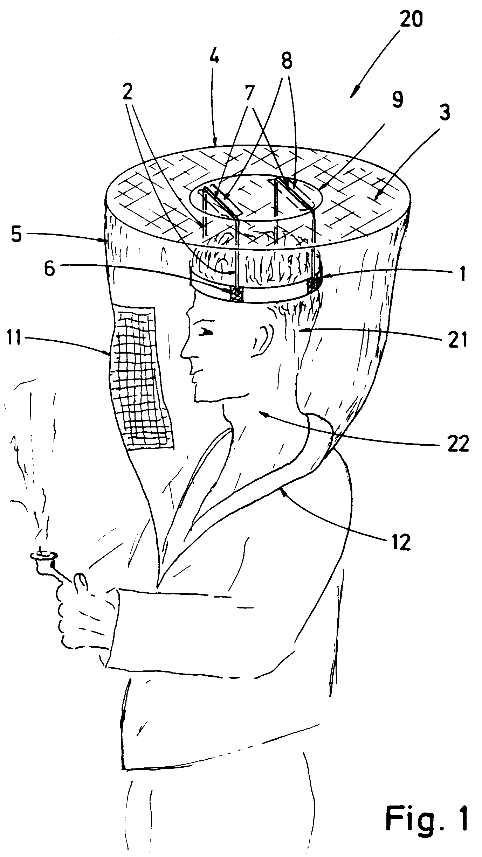

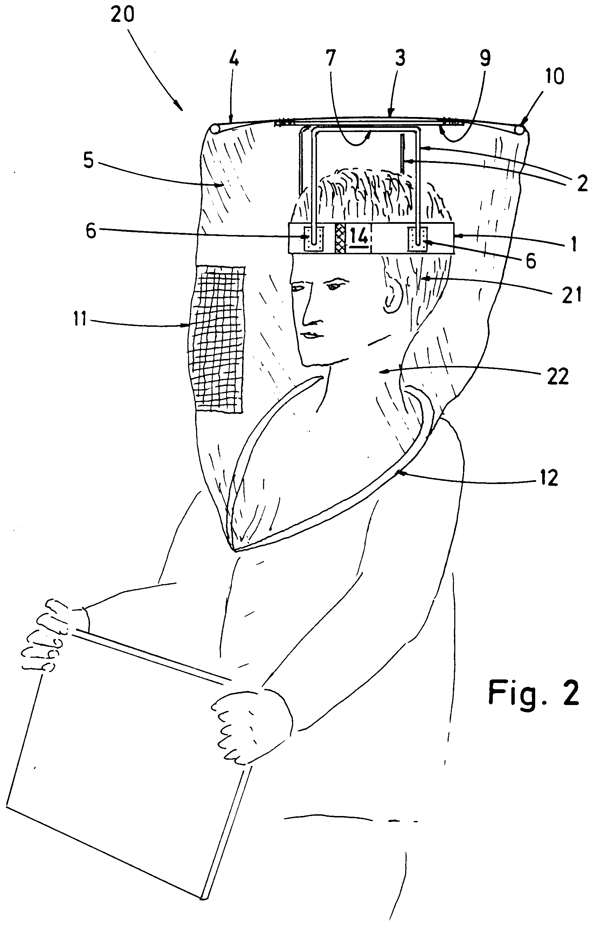

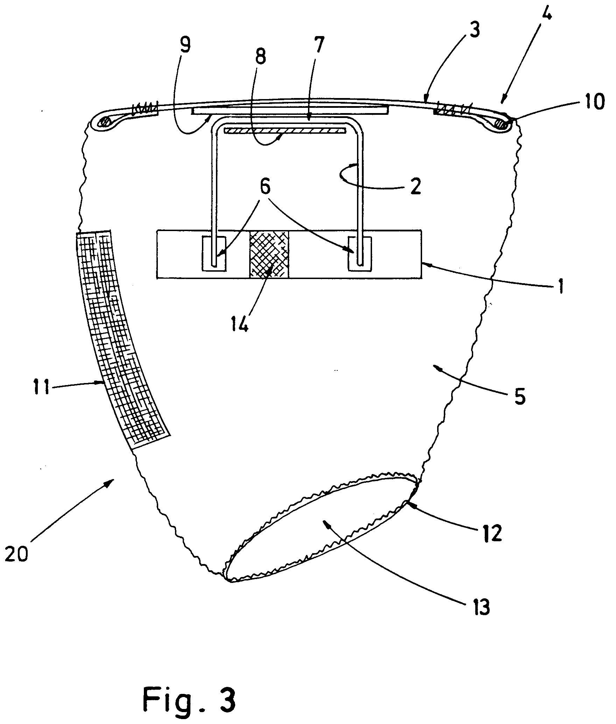

Aus der perspektivischen Darstellung der Figuren 1 und 2 ist ersichtlich, daß die Imkerhaube seinem Träger um den Kopf (21) herum sowie ebenfalls im Bereich vom Hals (22) einen erheblichen Freiraum schafft, der ein unbehindertes und von Beklemmung freies Arbeiten gestattet. Ein weiterer Vorteil besteht darin, daß die Haube (20) mit dem Revers eines üblichen Kleidungsstückes wie Jackett, Blouson, Mantel etc. problemlos bienendicht verbunden werden kann. Dies wird dadurch begünstigt, daß der von einem Gummizug (12) eingefaßte untere Rand des Schleiers (5) mit einer am Revers von Anzug, Mantel usw. schräg nach vorn bis in den Bereich der Brust verlaufenden Öffnung (vgl. Ziffer 13, Fig. 3) ausgebildet ist. Der Schleier kann fallweise mit normaler Oberbekleidung wie beispielsweise Jacke oder Mantel dadurch verbunden werden, daß der untere Rand mit dem Gummizug (12) unter das Revers bzw. den Kragen gezogen wird, womit in einfacher Weise eine bienendichte Verbindung hergestellt ist, die auch ebenso einfach wieder gelöst werden kann. Die Haube (20) in ihrer erfindungsgemäßen Ausbildung gibt ihrem Träger ein Höchstmaß an Bewegungsfreiheit, Luftzutritt zum Körper und gestattet ein problemloses Anlegen zur bienendichten Verbindung mit der Schutzkleidung wie Anzug, Mantel oder dgl., sowie ein ebenso problemloses Lösen beim Ausziehen.

Die Stützglieder (2) der Haube (20) bestehen aus u-förmigen Drahtbügeln, die mit ihren freien Enden in Taschen (6) des Kopfbandes (1) eingenäht sind und vorzugsweise aus Flachprofil-Stahldraht bestehen. Jeweils zwei Drahtbügel sind mit ihren die Schenkel (2) verbindenden Querstegen (7) mittels parallel angeordneten Stofflaschen (8) derart im Abstand auf einem Stück Trägerstoff (9) auf- oder eingenäht, daß sie die Seitenkanten eines sich zwischen dem Kopfband (1) und dem Haubendach (3) erstreckenden imaginären Kubus bilden. Dadurch wird mit einfachen Mitteln eine feste und sichere Verbindung zwischen dem Kopf (21) des Trägers und dem Dach (3) der Haube (20) hergestellt.

Das die Querstege (7) der Drahtbügel (2) aufnehmende Stück Trägerstoff (9) bildet einen Teil des Haubendaches (3) und ist mit diesem vernäht, wobei zunächst das Stück Trägerstoff (9) mit Hilfe der Stofflaschen (8) mit den Drahtbügeln vernäht wird. Deren Enden werden dann in die Taschen (6) am Kopfband (1) gesteckt und darin befestigt, was durch Vernähen oder Kleben vorgenommen werden kann. Anschließend wird dann das Haubendach (3) durch Vernähen oder Verkleben mit dem Stück Trägerstoff (9) verbunden.

Das Kopfband (1) kann mittels eines gummierten Frotteebandes (14) in der Weite einstellbar an die Kopfform des Trägers angepaßt werden. Statt des Frotteebandes (14) kann aber auch ein Klettverschluß verwendet werden. Der Bienenschleier (5) vor dem Gesichtsfeld des Trägers weist üblicherweise einen Gittereinsatz (11) aus feinmaschigem Kunststoffgewebe auf. Eine leichte und doch steife Ausbildung des Haubendaches (3) wird dadurch erreicht, daß dieses ein kreisförmiges und am Rand (4) von einem Drahtring (10) aufspannbar gehaltenes, flächenhaftes Formteil aus festem Stoff wie beispielsweise Drillich ist.

Die erfindungsgemäße Imkerhaube erfüllt die gestellte Aufgabe optimal, nämlich einerseits den Imker vor Bienenstichen zu schützen, und andererseits ihm ein Höchstmaß an Bewegungsfreiheit sowie Luftzutritt zum Körper zu gestatten, und dies ohne Einengung am Hals und ohne den Zwang eines hochgeschlossenen Spezialanzuges.

Die erfindungsgemäßen Maßnahmen sind nicht auf das in den Zeichnungsfiguren dargestellte Ausführungsbeispiel beschränkt. So kann beispielsweise, ohne den Rahmen der Erfindung zu verlassen, die Imkerhaube eine beliebige Form aufweisen, beispielsweise auch vieleckig sein. Die jeweilige konstruktive Ausgestaltung ist in Anpassung an die spezielle Verwendung der Haube dem Fachmann anheimgestellt.

**Patentansprüche**

1. Kopfschutz für Imker mit einem zum bienendichten Anschluß an einen Anzug, Mantel, Blouson oder Jacke ausgebildeten Bienenschleier, gekennzeichnet durch eine Imkerhaube (20) mit Kopfband (1) und daran angeordneten, etwa vertikal nach oben sich erstreckenden Stützgliedern (2), die im Abstand vom Kopf (21) des Imkers ein Haubendach (3) tragen, an dessen Rand (4) der Bienenschleier (5) befestigt ist, wobei der von einem Gummizug (12) eingefaßte untere Rand des Schleiers (5) am bzw. unter dem Revers von Anzug, Mantel usw. schräg nach vorn bis in den Bereich der Brust verlaufend und bienendicht anschließbar ausgebildet ist.

2. Imkerhaube nach Anspruch 1, dadurch gekennzeichnet, daß die Stützglieder (2) aus u-förmigen Drahtbügeln bestehen, die mit ihren freien Enden in Taschen (6) des Kopfbandes (1) eingenäht sind.

3. Imkerhaube nach den Anspruch 1 oder 2, dadurch gekennzeichnet, daß die Drahtbügel (2) aus Flachprofil-Stahldraht bestehen.

4. Imkerhaube nach einem oder mehreren der Ansprüche 1 bis 3, dadurch gekennzeichnet, daß jeweils zwei Drahtbügel mit ihren die Schenkel (2) verbindenden Querstegen (7) mittels parallel angeordneten Stofflaschen (8) derart im Abstand auf einem Stück Trägerstoff (9) aufgenäht sind, daß sie die Seitenkanten eines sich zwischen dem Kopfband (1) und dem Haubendach (3) erstreckenden imaginären Kubus bilden.

5. Imkerhaube nach einem oder mehreren der Ansprüche 1 bis 4, dadurch gekennzeichnet, daß das die Drahtbügel aufnehmende Stück Trägerstoff (9) ein Teil des Haubendaches (3) bildet und mit diesem fest vernäht ist.

6. Imkerhaube nach einem oder mehreren der Ansprüche 1 bis 5, dadurch gekennzeichnet, daß das Haubendach (3) ein kreisförmiges und am Rand (4) von einem Drahtring (10) aufspannbar gehaltenes, flächenhaftes Formteil aus festem Stoff wie beispielsweise Drillich ist.

7. Imkerhaube nach einem oder mehreren der Ansprüche 1 bis 6, dadurch gekennzeichnet, daß das Kopfband (1) mittels eines gummierten Frotteebandes (14) einstellbar ist.

8. Imkerhaube nach einem oder mehreren der Ansprüche 1 bis 7, dadurch gekennzeichnet, daß der Bienenschleier (5) vor dem Gesichtsfeld des Trägers einen Gittereinsatz (11) aus feinmaschigem, vorzugsweise schwarzem Kunststoffgewebe aufweist.

EP 0 502 402 A1

Fig. 1

EP 0 502 402 A1

Fig. 2

6

# Fig. 3

Europäisches Patentamt

# EUROPÄISCHER RECHERCHENBERICHT

Nummer der Anmeldung

EP 92 10 3126

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X<br>A | US-A-1 342 277 (DOWD)<br>* das ganze Dokument *<br>--- | 1,3<br>2,4-8 | A01K55/00 |
| A,D | DE-B-1 912 742 (FASSBENDER)<br>--- | 1-8 | |
| A | FR-A-651 501 (JOSTEN)<br><br>----- | | |
| | | | **RECHERCHIERTE SACHGEBIETE (Int. Cl.5 )**<br><br>A01K<br>A42B |

Der vorliegende Recherchenbericht wurde für alle Patentansprüche erstellt

| Recherchenort | Abschlußdatum der Recherche | Prüfer |
|---|---|---|
| DEN HAAG | 18 MAI 1992 | VON ARX V.U. |